# EUROPEAN PATENT APPLICATION

(11) **EP 4 163 169 A1**
(43) Date of publication of application: **12.04.2023**
(21) Application number: 21201280.1
(22) Date of filing: 06.10.2021
(51) Int. Cl.: B60T 17/16, F16D 65/18

(54) **BRAKE ACTUATOR AND BRAKE ACTUATION DEVICE**

(71) Applicant: KNORR-BREMSE Systeme für Nutzfahrzeuge GmbH, 80809 München (DE)
(72) Inventor: SZABO, Janos, 1101 Budapest (HU); KOKREHEL, Csaba, 1119 Budapest (HU); MLINARCSEK, Csaba, 1165 Budapest (HU); BLESSING, Michael, 80687 München (DE); NEMETH, Huba, 1116 Budapest (HU); BUCH, Andreas, 82024 Taufkirchen (DE); PAHLE, Wolfgang, 83707 Bad Wiessee (DE)
(74) Representative: Prüfer & Partner mbB Patentanwälte · Rechtsanwälte

(57) **Abstract**

A brake actuator (1) and an operation device (9) are disclosed, wherein the brake actuator (1) can be operated externally respectively manually by the operation device (9), which is attachable to the brake actuator (1).

Further, a brake system, a vehicle and a method for operation are disclosed.

## Description

The current invention relates to a brake actuator, a brake actuation device, in particular an emergency actuation device, a brake system, a vehicle and a method.

Today, electro-pneumatic brake actuators are commonly used in commercial vehicles. In most of the cases these actuators use a pneumatic energy source via pneumatic cylinders to realize a service and parking brake actuation, wherein different actuators are used. The parking brake functionality is realized by an actuator, which is independent to a further actuator for realizing the service brake functionality. Single brake actuation can be realized even without pressurized air as energy source due to the spring-based parking brake actuator design. When pressure is lost in the system, the pretensioned spring in the parking brake chamber provides enough brake torque or clamping force to stop the vehicle or hold it in standstill state. To make the vehicle towable in case of no pressurized air supply is available onboard, the parking brake actuator shall be released. In the combined pneumatic brake chambers this release can be done by a threaded mechanism. The threaded shaft is protruded outside the spring brake chamber, being accessible for an operator person. By rotating this shaft with an ordinary wrench the brake can be released.

In the future, the electro-mechanic brake actuation becomes more widespread. Also for these brake types, the requirement of external actuation and release possibility shall be fulfilled. In such a failure case when the brakes remain applied and could not be released by the normal operational way, a brake release solution is needed to make the vehicle towable and vice-versa an actuation after towing to park it again.

Therefore, it is an object of the current invention to provide a solution for this problem.

This object is achieved by the subject-matter of the independent claims. Advantageous embodiments are subject-matter of the dependent claims.

In the following, the term rotational driving movement or the like is used. That means that an active driving of the respective element is carried out or can be carried out, wherein the driving torque is applied from one direction. However, this term does not exclude the possibility of a rotational driving movement, wherein the driving is carried out from the other direction, that means that a driven element can now act as a driving element.

According to the invention, a brake actuator is provided, comprising:
- an actuating mechanism comprising an actuation element moveable along an actuating direction and configured to bring at least two brake friction elements of a brake into engagement by moving along the actuating direction, wherein the actuating mechanism is configured to be rotationally driven and to transfer the rotational driving movement into the movement of the actuation element;
- a locking mechanism, configured to lock the actuation element in at least one position along the actuating direction; and
- an interface configured for attachment of an operation device to the brake actuator, wherein the interface comprises an actuating mechanism operating portion and/or a locking mechanism operating portion for operating the brake actuator by the operation device, wherein
the actuating mechanism is configured to reset the actuation element into a brake release position along the actuating direction when it is not driven by the actuating mechanism.

Preferably, the brake actuator is configured to keep the at least two brake friction elements in an engaged position by locking the actuation element in the at least one position along the actuating direction. Thereby, the vehicle comprising the brake actuator can be hold in a non-moving state by the engaged brake friction elements, when the actuation element is locked, accordingly. Alternatively or additionally, the brake actuator can be configured to keep the at least two brake friction elements in a non-engaged position by locking the actuation element in at least one position along the actuating direction. That means, the brake actuator is configured to engage the at least two brake friction elements when the locking of the actuation element is released. In particular, the brake actuator can be configured as an elastically preloaded brake actuator, in particular a spring-loaded brake actuator, wherein the at least two brake friction elements engage when they or the corresponding actuation element are released Thereby, the vehicle comprising the brake actuator can be hold in a non-moving state by the engaged brake friction elements, when the actuation element is released.

The actuating direction can be configured as a straight line or as a circle line or as a combination thereof. In particular, the actuating direction is formed to bring the at least two friction elements of a disc brake and/or of a drum brake into engagement.

The brake actuator preferably comprises a transmission mechanism and/or a push element to apply the movement of the actuation element to the at least two brake friction elements of the brake.

The brake preferably comprises a disc brake or a drum brake, wherein the at least two brake friction elements comprise the brake disc and the brake pads and/or the brake drum and the brake shoes.

Preferably, the actuating mechanism is configured to transfer the rotational driving movement into the movement of the actuation element along the actuating direction by a gear mechanism. Further preferably, to transfer the movement of the actuation element along the actuating direction into the rotational driving movement by the gear mechanism. If the brake actuator is configured according to both configurations, the rotational driving movement can be transferred into the movement of the actuation element and vice versa.

Preferably, the locking mechanism is configured to lock the actuation element by engaging with a locking counterpart of the actuating mechanism, which is rotationally driven, or by engaging with a locking counterpart that is moved along the actuating direction, in particular with the actuating element. When the locking counterpart is rotationally movable, the locking counterpart is preferably driven or moved by the rotational driving movement of the actuating mechanism. In particular, the locking engagement can be realized by a frictional engagement of a locking element of the locking mechanism with the locking counterpart of the actuating mechanism. For example, the locking mechanism, respectively the locking element, comprises a locking clutch with the locking element or in general a friction locking element configured to be engaged with the locking counterpart of the actuating mechanism.

The brake actuator according to the invention can be configured as a service brake actuator, wherein by the use of the locking mechanism, the at least two brake friction elements can be kept in engaged state, to hold the vehicle in a not-moving state. Alternatively, the brake actuator can be configured as a separate actuator as well, which is only configured to hold the vehicle in a not-moving state by keeping the at least two brake friction elements engaged, wherein the service braking functionality is realized by a further brake actuator. The brake friction elements engaged by the brake actuator and by the further brake actuator can be the identical or different from each other.

Preferably, the reset of the actuation element into a brake release position along the actuating direction is realized by a pretension of the brake actuator, which is increased when the at least two brake friction elements are engaged respectively when the actuation element is moved in the actuating direction. That means, that the brake friction elements disengage due to the reset of the actuation element when the actuation element is not held in a position by the locking mechanism wherein the brake friction elements are engaged. The pretension is preferably caused by a spring of the brake actuator.

Preferably, the brake actuator, in particular the actuating mechanism, comprises a motor, in particular an electric motor, for the rotational driving movement, and/or wherein the brake actuator is configured to be connected to an electric motor for the rotational driving or movement.

Preferably, the brake actuator, respectively the actuating mechanism, in particular the gear mechanism of the actuating mechanism, comprises a spindle and nut drive, a screw drive, in particular a ball screw drive, or a pinion and gear rack to transfer the rotational driving or movement into the movement of the actuation element.

Preferably, the locking mechanism operating portion is configured to lock and/or unlock the actuation element by receiving a locking and/or unlocking movement from the operation device. If the locking mechanism comprises a locking friction element to engage with a corresponding locking counterpart of the actuating mechanism as described above, the locking mechanism operating portion comprises a corresponding control element to control the frictional engagement. In particular, the locking mechanism comprises a locking clutch. For example, the locking mechanism operating portion comprises a moveable locking control element configured to engage or disengage the locking friction element and the counterpart according to the movement from the operation device. In particular, the locking control element comprises a rod, configured to engage and/or disengage the locking clutch.

Alternatively or additionally, the actuating mechanism operating portion is configured to receive the rotational driving movement from the operation device and to transmit the rotational driving movement to the actuating mechanism. Therefore, the actuating mechanism operating portion is configured to be connected to a rotary control element of the operation device. Preferably, the actuating mechanism operating portion can be attached to the rotary control element in a torque proof manner to apply a rotational driving movement to the actuating mechanism operating portion. The attachment is preferably realized by a form fit connection of the rotary driving element to the operation device.

Preferably, the interface of the brake actuator comprises assembly elements configured to engage with corresponding assembly elements of the operation device. In particular, the assembly elements can comprise holes, bolts, screws or the like, which are configured to engage accordingly for assembly. Therefore, the brake actuator and the operation device can be attached to each other in a secure way, so that the brake actuator can be operated by the operation device as long as it is attached to the brake actuator.

According to the invention, an operation device, in particular an emergency operation device, for a brake actuator as described above is provided. The operation device is configured for attachment to such a brake actuator, in particular to the interface of such a brake actuator. According to one aspect, the operation device is configured to be connected to the actuating mechanism operating portion and/or the locking mechanism operating portion of the brake actuator in particular for external operation.

For connection with the actuating mechanism operating portion, the operation device comprises a rotary control element configured to be connected torque proof to the actuating mechanism operating portion, in particular to the rotary driving element. The operation device and the brake actuator are configured such that, when they are attached to each other, a rotational driving movement of the rotary control element is transferred to the actuating mechanism of the brake actuator. That means, by the torque proof connection it is possible to control the movement of the actuating mechanism, in particular of the actuation element along the actuating direction by the rotational movement of the rotary control element. That means further, that by blocking or locking the rotational movement of the rotary control element, the rotational driving movement of the actuating mechanism and therefore the movement of the actuation element along the actuating direction can be blocked.

Features concerning the operation device, which have been mentioned above in the description of the brake actuator, are of course to be considered at least as optional features of the operation device.

External operation has the meaning that the brake actuator can be operated from another place as the driver seat. In particular, external operations can be understood in the meaning of a manual operation.

As an emergency operation device, the operation device can be used when the brake actuator cannot be operated, for example due to loss or absence of energy so that no rotary movement can be applied by the brake actuator itself to engage or disengage the at least two brake friction elements of the brake or to unlock the actuation element from the locking mechanism. That means, the operation device allows an operator when it is attached to the brake actuator, to engage or disengage the brake of the vehicle.

In case the vehicle comprises a trailer, which is kept in a non-moving state by the brake actuator, which keeps the at least two brake friction elements engaged, wherein the trailer comprises no energy source to operate the brake actuator, the operation device can be used to disengage the brake friction elements by disengaging the locking mechanism via the locking mechanism operating portion. This leads to a release of the brake friction elements due to the pretension of the brake actuator. Then, the vehicle can be shunted to another position. When the vehicle is in its desired position the brake friction elements can be engaged again by applying a rotational driving movement via the actuating mechanism operating portion by the operation device. The vehicle is than in a non-moving state again.

Preferably, the operation device is configured to apply a rotational driving movement to the brake actuator via the actuating mechanism operating portion, wherein preferably, for applying the rotational driving movement, the operation device comprises a turning handle, a lever, a motor or an interface configured to be connected with a turning handle, a lever or a motor. The interface is preferably provided on the rotary control element of the operation device, wherein the rotational driving movement can be applied to the rotary control element. The interface can be configured for connection with a tool, in particular a wrench. In case the vehicle is in maintenance, usually, tools like wrenches are available in the surrounding of the vehicle. Therefore, by attaching the operation device to the brake actuator, an interface is provided by the operation device, which can easily be accessed by an operator. If the operation device comprises a motor, in particular an electric motor, the rotational driving movement can be applied by manually activating the motor to start the driving by the motor. As an energy source for the motor, the operation device can be connected to an external energy source like a generator or a power supply network, in particular as it is available in a repair shop. Alternatively or additionally, the operation device can comprise its own energy source, for example an electric energy storage.

Preferably, the operation device comprises a back movement prevention mechanism configured to prevent a back movement of the actuation element, in particular against the actuating direction, when a rotational driving movement is applied manually to the actuating mechanism operating portion. When the brake actuator is driven rotary by the operation device, to engage the at least two brake friction elements, the rotational driving movement has to be applied against the pretension of the brake actuator. In particular, when the rotational driving movement is applied to the brake actuator manually, the back movement prevention mechanism helps an operator to apply the rotational driving movement by avoiding a back movement when the operator has to regrasp the handle or lever. Preferably, the back movement prevention mechanism is configured to act on the rotary control element. The back movement prevention mechanism can comprise a ratchet mechanism to prevent the back movement.

Preferably, the operation device comprises a holding mechanism configured to hold the actuation element in its current position along the actuating direction, wherein preferably, the holding mechanism is configured to be actuated externally, respectively by manual operation. The holding of the actuation element is preferably realized by the holding mechanism acting on the rotary control element of the operation device. As described above, locking of the actuating mechanism, respectively of the actuation element, can be blocked by blocking the rotary control element. The holding mechanism can act by form fit or frictionally, in particular on the rotary control element. When the locking mechanism is released, that means, the movement of the actuation element along the actuation direction is not blocked by the locking mechanism of the brake actuator, the holding mechanism is configured to lock the actuation element by blocking a rotation due to the pretension of the brake actuator. Therefore, an operator can, in particular manually, control the starting point of time when a brake release starts due to the pretension of the brake actuator. The holding mechanism is preferably configured to engage with a counterpart of the operation device that is in connection with the rotary driving part of the operation device.

Preferably, the operation device is configured to lock and/or unlock the actuation element by operating the locking mechanism of the brake actuator.

Preferably the operation device is configured to actuate the locking mechanism via the locking mechanism operating portion, in particular to lock and/or to unlock the actuation element. Therefore, the operation device is preferably configured to move the locking control element directly or indirectly. In particular, the operation device can comprise a motor and/or a transmission to move the locking control element. According to some embodiments, the moving of the locking control element can be manually controlled. The use of a motor and/or of a transmission is reasonable, if the force for moving the locking control element is too heavy for manual operation.

Preferably, the operation device comprises an energy absorbing unit configured to control the movement of the actuation element during brake release, wherein preferably, the energy absorbing unit comprises a brake, a clutch, a dry clutch, wet clutch, hydrodynamic coupling, an electro-magnetic device and/or a permanent magnet-based brake. The energy absorbing unit is configured to dissipate energy from the pretension of the brake actuator. Thereby, the brake friction elements are not disengaged immediately when the actuation element is unlocked by the locking mechanism and optionally by the holding mechanisms. Advantageously, a too abrupt moving of the vehicle is avoided. Instead, if the energy absorbing unit is configured accordingly, the vehicle will only be movable with a delay. Preferably, the energy absorbing unit is configured to dissipate rotational energy by acting on the rotary control element of the operation device. Analogously to the blocking of the rotary movement of the actuating mechanism, respectively the movement of the actuating element, the energy of the pretension of the brake actuator can be dissipated by the energy absorbing unit acting on the rotary control element.

According to the invention, a brake system for a vehicle comprising a brake actuator as described above is provided. Additionally or alternatively, the brake system is configured for attachment of an operation device as described above for actuating at least one brake actuator, in particular a brake actuator as described above.

Preferably, the brake system is configured as an electro-mechanic brake system.

According to the invention, a vehicle comprising a brake actuator as described above or a brake system as described above is provided, wherein
the vehicle is preferably configured as a commercial vehicle, a truck, a trailer, a bus and/or as a combination of a towing vehicle and a trailer, and/or wherein
the vehicle preferably comprises a pure electric, a hybrid or a conventional powertrain.

According to the invention, a method for operating a brake actuator as described above by an operation device as described above is provided.

The method preferably comprises the following steps for releasing the brake:
- attaching the operation device to the interface of the brake actuator;
- unlocking the locking mechanism of the brake actuator by the operation device;
- optionally: releasing the holding mechanism of the operation device;
- optionally: dissipating pretension energy of the brake actuator by the energy absorbing unit.

The method preferably comprises the following steps for actuating the brake:
- attaching the operation device to the interface of the brake actuator;
- rotational driving, in particular manually driving, of the actuating mechanism of the brake actuator by the operation device to engage the friction elements of the brake;
- locking the locking mechanism of the brake actuator by the operation device to keep the friction elements engaged.

In the following, a particular embodiment of the invention is described by referring to the attached drawings.
Fig. 1 shows a brake actuator according to an embodiment of the invention, and
Fig. 2 shows an operation device according to an embodiment of the invention.

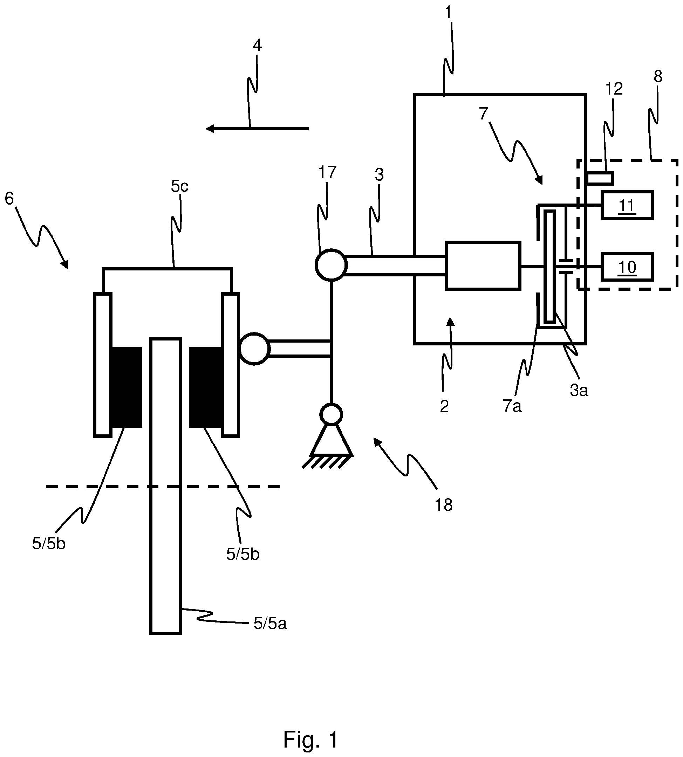

In Fig. 1, a brake actuator 1 is shown comprising an actuating mechanism 2 with an actuation element 3, which is configured to be movable along an actuating direction 4, which is extending horizontally from the left to the right in the drawing.

The actuation element 3 is configured as a push rod, wherein its left end is connected via a joint 17 to a transmission mechanism 18 comprising a lever, which is in contact with a brake 6 comprising friction elements 5. According to the shown embodiment, the friction elements 5 comprise a brake disc 5a and two brake pads 5b provided in a brake calliper 5c, which are configured to engage frictionally with the brake disc 5a to activate the brake 6. The engaging of the friction elements 5 is caused by moving the actuation element 3 into a brake actuating position on the actuating direction 4.

The actuating mechanism 2 is configured to be rotationally driven by a motor (not shown) of the brake actuator 1, in particular by an electric motor, wherein the rotary movement is transferred into the movement of the actuating element 3 along the actuating direction 4 by a transmission device, in particular a spindle and nut drive.

Further, the brake actuator 1 comprises a locking mechanism 7 configured to lock the actuation element 3 in at least one brake actuating position along the actuating direction 4 to keep the brake friction elements 5 in an engaged position. The locking mechanism 7 is configured to lock the actuation element 3 by engaging with a locking counterpart 3a of the actuation mechanism 2. In the embodiment shown in the drawing, the locking mechanism 7 comprises a locking clutch 7a, wherein the locking counterpart 3a is a part of the locking clutch 7a. The locking counterpart 3a is in torque or rotary proof connection with the rotationally driven part of the actuating mechanism 2, wherein corresponding parts of the locking clutch 7a are fixed. By activation of the locking mechanism 7, respectively the locking clutch 7a, that means by frictional engagement of the locking clutch 7a with the locking counterpart 3a, the rotationally driven part can be locked so that no rotary movement is possible and therefore, the actuating element 3 is locked via the spindle and nut drive in its current position along the actuating direction 4. If the friction elements 5 of the brake 6 are engaged in this position, the brake 6 is kept activated and the vehicle can be held in a non-moving state.

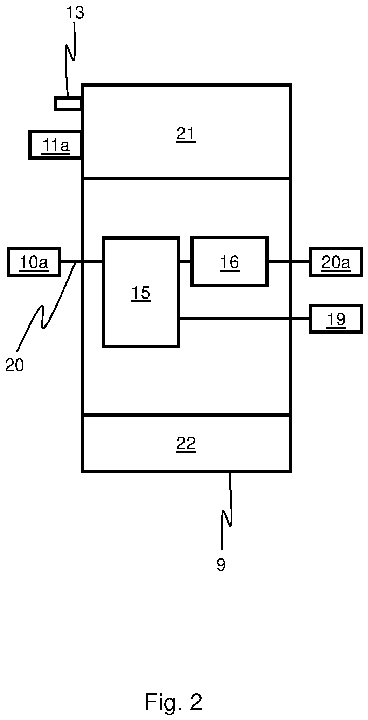

The brake actuator 1 further comprises an interface 8. The interface 8 is configured for attachment of an operation device 9 (in particular according to Fig. 2) to the brake actuator 1. The interface 8 comprises an actuating mechanism operating portion 10 and/or a locking mechanism operating portion 11 the operation device 9 can be connected with for operating the brake actuator 1.

For operating the locking mechanism 7, the locking mechanism operating portion 11 comprises a moveable locking control element, that allows the locking clutch 7a to be engaged or disengaged.

For operating the actuating mechanism 2, the actuating mechanism operating portion 10 the operation device 9 can be attached to, accordingly, wherein a rotary movement can be applied by the operation device 9 to the rotary part of the actuating mechanism 2. Therefore, the actuation element 3 can be moved by rotational driving the actuating mechanism operating portion 10 and the movement of the actuation element 3 along the actuating direction 4 can be transferred as a rotary movement to the operation device 9.

Further, the actuating mechanism 2 is configured to reset the actuation element 3 into a brake release position along the actuating direction 4 when it is not driven. The reset of the actuation element 3 into a brake release position along the actuating direction is realized by a pretension of the brake actuator 1, which is increased when the at least two brake friction elements 5 are engaged. That means, that the brake friction elements 5 disengage due to the reset of the actuation element 3 when the actuation element 3 is not held in a position by the locking mechanism 7 wherein the brake friction elements 5 are engaged. The pretension is preferably caused by a spring (not shown) of the brake actuator 1.

**Fig. 2** shows an operation device according to an embodiment of the invention.

The operation device 9, in particular configured as an emergency operation device, for the brake actuator 1, in particular according to Fig. 1, is configured for attachment to the interface 8 of the brake actuator 1, wherein the operation device 9 is configured to be connected to the actuating mechanism operating portion 10 and the locking mechanism operating portion 11 of the brake actuator 1 for external operation of the brake actuator 1. For the connection to the portions 10 and 11, the operation device 9 comprises connection portions 10a, 11a that are configured accordingly.

The operation device 9 comprises a rotary control element 20 comprising a connection portion 10a and therefore configured to engage rotary or torque proof with the actuating mechanism operating portion 10. The rotary control element 20 comprises an interface 20a configured to be connected with a turning handle, lever or motor. Therefore, a rotational driving movement can be applied to the rotary control element 20 manually or by a motor and the rotational driving movement can be further applied to the actuating mechanism operating portion 10 and further to the rotationally driven part of the actuating mechanism 2. Since the rotational driving movement is transferred into the movement of the actuation element 3, an operator can control the engagement of the friction elements 5 via the operation device 9. Vice versa, the movement of the actuation element 3 along the actuating direction 4 can be transferred as a rotary movement to the rotary control element 20.

Further, the operation device 9 comprises a holding mechanism 15 and an energy absorbing unit 16.

The holding mechanism 15 is configured to hold the actuation element 3 in its current position along the actuating direction 4, wherein the holding mechanism 15 is configured for manual operation by a holding mechanism control interface 19. When the locking mechanism 7 is released, that means, the movement of the actuation element 3 along the actuation direction 4 is not blocked by the locking mechanism 7 of the brake actuator 1, the holding mechanism 15 is configured to lock the actuation element 3 by blocking a rotational movement of the rotary control element 20, which is caused by the pretension of the brake actuator 1. This rotary movement can be locked by a frictional engagement of a holding friction element of the holding mechanism 15 with a holding counterpart of the rotary control element 20. Therefore, an operator can control the starting point of time when a brake release starts due to the pretension of the brake actuator 1 by manual operation of the holding mechanism 15 via the holding mechanism control interface 19. The holding mechanism control interface 19 can comprise a button or a lever for manual operation.

The energy absorbing unit 16 is configured to control the rotary movement of the rotary control element 20 and therefore, the movement of the actuation element 3 during brake release, wherein the energy absorbing unit 16 can comprise a brake, a clutch, a dry clutch, a wet clutch, a hydrodynamic coupling, an electro-magnetic device and/or a permanent magnet-based brake. The energy absorbing unit 16 is configured to dissipate energy from the pretension of the brake actuator 1 by acting on the rotary control element 20, accordingly. Thereby, the brake friction elements 5 of the brake are not disengaged immediately when the actuation element 3 is unlocked by the locking mechanism 7 and optionally by the holding mechanism 15. Advantageously, a too abrupt moving of the vehicle is avoided. Instead, if the energy absorbing unit 16 is configured accordingly, the vehicle will only be movable with a delay.

For unlocking the locking mechanism 7 of the brake actuator 1, the operation device 9 comprises a locking control unit 21 with the connection portion 11a. The locking control unit 21 is configured to move the locking control element of the locking mechanism operating portion 11 via the connected connection portion 11a. Therefore, the locking clutch 7a can be engaged or disengaged by control of the locking control unit 21. The locking control unit 21 is configured for external or manual operation.

Further, the operation device 9 comprises at least one assembly element 13 configured to engage with corresponding assembly elements 12 of the interface 8 of the brake actuator 1.

### LIST OF REFERENCE SIGNS

- 1: brake actuator
- 2: actuating mechanism
- 3: actuation element
- 3a: locking counterpart
- 4: actuating direction
- 5: friction element
- 5a: brake disc
- 5b: brake pad
- 5c: brake caliper
- 6: brake
- 7: locking mechanism
- 7a: locking clutch
- 8: interface
- 9: operation device
- 10: actuating mechanism operating portion
- 10a: connection portion
- 11: locking mechanism operating portion
- 11 a: connection portion
- 12: assembly element
- 13: assembly element
- 15: holding mechanism
- 16: energy absorbing unit
- 17: joint
- 18: transmission mechanism
- 19: holding mechanism control interface
- 20: rotary control element
- 20a: interface
- 21: locking control unit
- 22: energy storage

## Claims

1. Brake actuator (1) comprising:
- an actuating mechanism (2) comprising an actuation element (3) moveable along an actuating direction (4) and configured to bring at least two brake friction elements (5) of a brake (6) into engagement by moving along the actuating direction (4), wherein the actuating mechanism (2) is configured to be rotationally driven and to transfer the rotational driving movement into the movement of the actuation element (3);
- a locking mechanism (7), configured to lock the actuation element (3) in at least one position along the actuating direction (4); and
- an interface (8) configured for attachment of an operation device (9) to the brake actuator (1), wherein the interface (8) comprises an actuating mechanism operating portion (10) and/or a locking mechanism operating portion (11) for operating the brake actuator (1) by the operation device (9), wherein
the actuating mechanism (2) is configured to reset the actuation element (3) into a brake release position along the actuating direction (4) when it is not driven by the actuating mechanism (2).

2. Brake actuator (1) according to claim 1, wherein
the brake actuator (1), in particular the actuating mechanism (2), comprises an electric motor for the rotary driving, and/or wherein
the brake actuator (1) is configured to be connected to an electric motor for the rotary driving.

3. Brake actuator (1) according to claim 1 or 2, wherein
the brake actuator (1) comprises a spindle and nut drive, a screw drive, in particular a ball screw drive, or a pinion and gear rack to transfer the rotational driving movement into the movement of the actuation element (3).

4. Brake actuator (1) according to one of the preceding claims, wherein
the locking mechanism operating portion (11) is configured to lock and/or unlock the actuation element (3) by receiving a locking and/or unlocking movement from the operation device (9); and/or wherein
the actuating mechanism operating portion (10) is configured to receive the rotational driving movement from the operation device (9) and to transmit the rotational driving movement to the actuating mechanism (2).

5. Brake actuator (1) according to one of the preceding claims, wherein
the interface (8) comprises assembly elements (12) configured to engage with corresponding assembly elements (13) of the operation device (9).

6. Operation device (9), in particular an emergency operation device, for a brake actuator (1) according to one of the claims 1 to 5, configured for attachment to the interface (8) of the brake actuator (1), wherein
the operation device (9) is configured to be connected to the actuating mechanism operating portion (10) and/or the locking mechanism operating portion (11) of the brake actuator (1) for external operation.

7. Operation device (9) according to claim 6, wherein,
the operation device (9) is configured to apply a rotational driving movement to the brake actuator (1), in particular to the actuating mechanism (2), via the actuating mechanism operating portion (10), wherein preferably, for applying the rotational driving movement, the operation device (9) comprises a turning handle, lever, motor or an interface configured to be connected with a turning handle, lever or motor.

8. Operation device (9) according to claim 7, comprising
a back movement prevention mechanism configured to prevent a back movement of the actuation element (3) when a rotational driving movement is applied manually to the actuating mechanism operating portion (10).

9. Operation device (9) according to one of the claims 6 to 8, comprising
a holding mechanism (15) configured to hold the actuation element (3) in its current position along the actuating direction (4), wherein preferably, the holding mechanism (15) is configured to manual operation.

10. Operation device (9) according to one of the claims 6 to 9, wherein
the operation device (9) is configured to lock and/or unlock the actuation element (3) by operating the locking mechanism (7) of the brake actuator (1).

11. Operation device (9) according to one of the claims 6 to 10, wherein
the operation device (9) is configured to actuate the locking mechanism (7) via the locking mechanism operating portion (11), in particular to lock and/or to unlock the actuation element (3).

12. Operation device (9) according to one of the claims 6 to 11, comprising
an energy absorbing unit (16) configured to control the movement of the actuation element (3) during brake release, wherein preferably, the energy absorbing unit (16) comprises a brake, a clutch, a dry clutch, a wet clutch, a hydrodynamic coupling, an electro-magnetic device and/or a permanent magnet-based brake.

13. Brake system for a vehicle comprising a brake actuator (1) according to one of the claims 1 to 5, and/or wherein the brake system is configured for attachment of an operation device (9) according to one of the claims 6 to 12 for actuating at least one brake actuator, in particular a brake actuator (1) according to one of the claims 1 to 5, wherein
the brake system is preferably configured as an electro-mechanic brake system.

14. Vehicle comprising a brake actuator (1) according to one of the claims 1 to 5 or a brake system according to claim 13, wherein
the vehicle is preferably configured as a commercial vehicle, a truck, a trailer, a bus and/or as a combination of a towing vehicle and a trailer, and/or wherein
the vehicle preferably comprises a pure electric, a hybrid or a conventional powertrain.

15. Method for operating a brake actuator (1) according to one of the claims 1 to 5 by a operation device (9) by one of the claims 6 to 12.
